# EUROPÄISCHE PATENTSCHRIFT

(11) **EP 0 452 474 B1**
(45) Veröffentlichungstag und Bekanntmachung des Hinweises auf die Patenterteilung: **29.06.1994**
(21) Anmeldenummer: 90917553.1
(22) Anmeldetag: 31.10.1990
(51) Int. Cl.: A61C 17/02

(54) **MUNDDUSCHE MIT EINER DURCH EINEN ELEKTROMOTOR ANTREIBAREN FLÜSSIGKEITSPUMPE**
BUCCAL DOUCHE WITH A LIQUID PUMP DRIVEN BY AN ELECTRIC MOTOR
DOUCHE BUCCALE AVEC UNE POMPE DE LIQUIDE ENTRAINEE PAR UN MOTEUR ELECTRIQUE

(30) Priorität: 05.11.1989 DE 3936714
(43) Veröffentlichungstag der Anmeldung: 23.10.1991
(73) Patentinhaber: Petz, Günter, D-90431 Nürnberg (DE)
(72) Erfinder: Petz, Günter, D-90431 Nürnberg (DE)
(74) Vertreter: Göbel, Matthias, Dipl.-Ing.
(86) Internationale Anmeldenummer: EP9001827
(87) Internationale Veröffentlichungsnummer: WO9106258

(56) Entgegenhaltungen:
- EP-A- 0 085 795
- DE-A- 2 936 894
- DE-A- 3 601 617

## Beschreibung

Mundduschen gemäß dem ersten Teil der Ansprüche 1,13,14 und 16.

Eine Munddusche, welche jeweils die Merkmale des ersten Teils der Ansprüche 1,13,14 und 16 aufweist, ist aus der DE-A-3 601 617 bekannt.

Bei einer bekannten Munddusche (DE-OS 32 01 491) dieser Art ist am Handstück ein Schaltglied vorgesehen, das über in der Wandung der Schlauchleitung ausgebildete elektrische Leiter mit einer Regeleinrichtung für den Elektromotor in Verbindung steht. Die Verwendung elektrischer Leiter ist jedoch wegen des überwiegenden Gebrauchs von Mundduschen in Feuchträumen unfallträchtig.

Es ist Aufgabe der Erfindung die Ausbildung von Mundduschen mit einem vom Handstück aus fernregelbaren Elektromotor sicher zu machen.

Der Erfindung gemäß ist diese Aufgabe dadurch gelöst, daß die Leiter durch zwei flexible Lichtleiter gebildet sind, daß den dem Elektromotor zugenäherten Enden des einen Lichtleiters ein Lichtgeber und des anderen Lichtleiters ein lichtempfindlicher Empfänger und den dem Elektromotor abgewandten Enden beider Lichtleiter ein zu den beiden Lichtleiterenden verschieb- und/oder klappbeweglich ausgebildeter Reflektor zugeordnet ist und daß der lichtempfindliche Empfänger an einem elektronischen Regelkreis und dem Stromversorgungsteil für Ein-, Ausschaltungen und Drehzahländerungen des Elektromotors anliegt. Auf diese Weise ist vermittels mehr oder weniger Licht bzw. Lichtfortfall eine fernregelbare Munddusche geschaffen, bei der durch die Verwendung von Lichtleitern eine stromlose Verbindung von Handstück und Regelkreis des Elektromotors erzielt ist. Es versteht sich, daß der Fortfall von elektrischen Leitern die Benutzung von Mundduschen sicherer macht.

In Ausgestaltung der Munddusche ist vorgesehen, die beiden Lichtleiter durch Glasfasern oder Glasfasernbündel zu bilden und in der Wandung der Schlauchleitung zu führen. Hierbei können die beiden Lichtleiter sortiert unmittelbar nebeneinander oder im Abstand voneinander in der Wandung der Schlauchleitung untergebracht sein. Außerdem besteht die Möglichkeit, daß die beiden Licht- leiter sortiert einen gemeinsamen Bauteil bilden und in diesem durch eine für Reflexionen indifferente Zwischenschicht voneinander getrennt sind. Die Verwendung eines gemeinsamen Bauteils führt zu einer besonders einfachen Ausgestaltung der Munddusche, da die Schlauchleitung lediglich einen Kanal für die Aufnahme der Lichtleiter aufzuweisen braucht. Es versteht sich, daß die Lichtleiter beliebig in der Schlauchleitung angeordnet, vorzugsweise in der Schlauchleitung eingeformt sind.

Außerdem ist vorgesehen, die beiden Lichtleiter unsortiert zu einem gemeinsamen Bauteil zusammenzufassen und die einen Enden der beiden Lichtleiter voneinander getrennt einer Lichtquelle bzw. einem lichtempfindlichen Empfänger und die anderen Enden der Lichtleiter gemeinsam dem Reflektor zuzuordnen. Unter unsortiert wird eine beliebige Zusammenfassung von Lichtleiterfasern verstanden. Es versteht sich daß die Lichtleiter mit beliebiger Querschnittsform, z.B. mit runder oder eckiger Querschnittsform ausgebildet sein können. Schließlich ist denkbar, als Lichtleiter jeweils eine beliebige Anzahl Glasfasern zu verwenden.

In Fortbildung der Erfindung ist vorgesehen, daß als Lichtquelle eine einen Lichtsender bildende Leuchtdiode dienen kann, während als lichtempfindlicher Empfänger eine Photodiode dient. Ferner ist vorgesehen, als Reflektor einen ebenen oder gekrümmten Spiegel in Anwendung zu bringen, der durch einen am Handstück verschieblich ausgebildeten Betätigungsknopf zu den Enden der Lichtleiter entfernbar oder annäherbar ist. So kann zu Drehzahlregelungen des Elektromotors durch Annäherung des Spiegels an den beiden Lichtleiterenden eine schnellere Drehgeschwindigkeit für den Elektromotor erreicht werden, während bei Entfernung des Spiegels die Drehgeschwindigkeit abnimmt. Ein- Ausschaltungen des Elektromotors können durch einfache Klapp- oder Schwenkbewegungen des Spiegels erreicht werden, wobei durch Fehlen von Reflexionen zwischen beiden Lichtleiterenden die elektronische Regeleinrichtung wirkungslos bleibt. Es versteht sich, daß in kinematischer Umkehrung die dem Elektromotor abgewandten Enden der Lichtleiter zu einem im Handstück ortsfesten Spiegel ortsveränderlich einstellbar ausgebildet sein können.

In einer alternativen Ausbildung der Munddusche ist vorgesehen, im Handstück einen in der Lichtmenge fixen Lichtgeber, z.B. einen Infrarotgeber abdeckbar, abschwenkbar oder verschiebbar anzuordnen, der über einen in der Wandung der Schlauchleitung geführten, flexiblen Lichtleiter auf einen dem anderen Ende zugeordneten lichtempfindlichen Empfänger im Aufnahmegehäuse für den Elektromotor, der an einem auf mehr oder weniger Licht ansprechend elektronischen Regelkreis und dem Stromversorgungsteil für Ein- Aus- und Drehzahländerungen des Elektromotors anlegbar ist, wirkt. Schließlich sind Maßnahmen zum leiterlosen Regeln bzw. Schalten des Elektromotors vom Handstück aus dadurch vorgesehen, daß das Handstück einen in der Intensität veränderlichen Infrarotgeber mit zugeordneter Stromquelle aufweist und daß der zugehörige elektronische Regelkreis für den Elektromotor mit einem Infrarotempfänger versehen ist. Zweckmäßig sind der Infrarotgeber und der Infrarotempfänger durch aufeinander abgestimmte Infrarotlichtfilter übergriffen, wodurch Streulicht wirkungslos bleibt oder Fehlregelungen und Fehlschaltungen ausgeschlossen bleiben. In Abweichung einer leiterlos regelbaren bzw. schaltbaren Munddusche kann das Handstück auch einen Ultraschallgeber und das Aufnahmegehäuse für den Elektromotor einen Ultraschallempfänger aufweisen.

Die Erfindung ist anhand von Ausführungsbeispielen in der Zeichnung verdeutlicht. Es zeigen:
- Fig. 1: ein Teilstück einer Munddusche mit einem Handstück,
- Fig. 2: Teilabschnitte von Lichtleitern in Seitenansicht,
- Fig. 3: Teilansicht eines Lichtleiters abgewandelter Ausführung, in Seitenansicht,
- Fig. 4: ein Schnitt nach der Linie IV-IV der Fig. 3,
- Fig. 5: eine Schlauchleitung mit Lichtleitern im Schnitt,
- Fig. 6: einen Lichtleiter anderer Ausbildung im Schnitt,
- Fig. 7: ein Teilstück einer Munddusche mit einem Handstück, gemäß einer weiteren Ausführungsform,
- Fig. 8: ein Teilstück einer Munddusche mit einem Handstück, gemäß anderer Ausführungsform und
- Fig. 9: eine Schlauchleitung mit Lichtleiter im Schnitt, vergrößert.

In den Figuren ist mit 1 ein Mundduschengehäuse bezeichnet, daß einen Vorratsbehälter 2 für Duschflüssigkeit trägt. Der Vorratsbehälter 2 steht über ein Rohrstück 3 mit einer Flüssigkeitspumpe 4 in Verbindung. Die Flüssigkeitspumpe 4 wird durch einen Elektromotor 5 angetrieben und fördert die Flüssigkeit in eine Schlauchleitung 6, die in ein Handstück 7 einmündet, daß ein Düsenrohr 8 trägt über das der Austritt der Flüssigkeit erfolgt. Der Flüssigkeitsaustritt ist durch ein Ventil 9 regelbar, das durch einen Betätigungsknopf 10 in bekannter Weise aus einer Trennstellung in Arbeitsstellungen bringbar ist. Die Schlauchleitung 6 nimmt in ihrer Wandung 6′ (Fig. 9) zwei optische Lichtleiter 11,12 in der Form von Lichtleitfasern auf, von denen einer mit seinem dem Elektromotor 5 zugewandten Ende, einer Leuchtdiode 13 und der andere mit seinem Ende einer Photodiode 14 zugeordnet ist. Die dem Handstück 7 zugewandten Enden beider Lichtleiter 11,12 sind einem Reflektor 15 im Handstück zugeordnet, der durch ein Betätigungsglied 16 zu den Enden der Lichtleiter 11,12 ortsveränderlich ist. Die Photodiode 14 liegt an einer Regeleinrichtung 17 für verschiedene Drehzahlen des Elektromotors bzw. Aus- und Einschaltungen an.

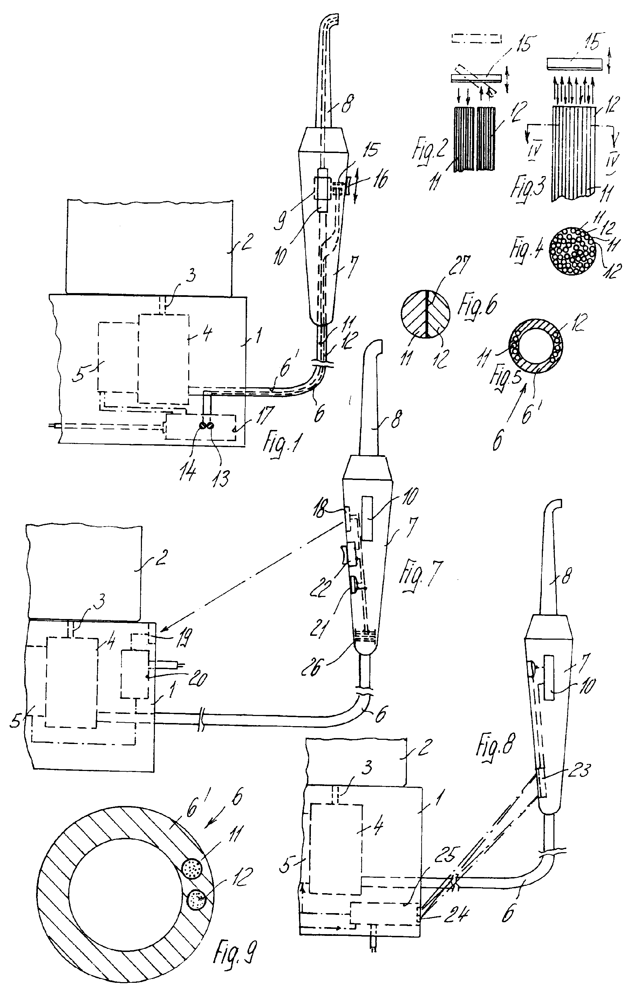

Das von der Leuchtdiode 13 ausgehende Licht gelangt über den Lichtleiter 12 zum Reflektor 15 und von diesem, wie in den Fig. 2 und 3 verdeutlicht in den Lichtleiter 11 und weiter zur Photodiode 14. Auf diese Weise erhält die Regeleinrichtung 17 ein optisches Signal das zu Regelungen bzw. Schaltungen für den Elektromotor ausgewertet wird. Durch mehr oder weniger weites Entfernen des Reflektors 15, z.B. aus der in Fig. 2 gezeigten Stellung in die strichpunktierte Stellung, wird die reflektierte Lichtmenge geringer bzw. mehr und führt zu verschiedenen Regelungen. Es versteht sich, daß in Abwandlung gegebenenfalls der Reflektor 15 ortsfest im Handstück angeordnet sein kann, während durch Verschieben der Enden der Lichtleiter 11,12 Relativbewegungen erzielt werden, die zu Regelungen nutzbar sind.

Während beim Ausführungsbeispiel der Fig. 2, und 6 die Lichtleiter 11,12 sortiert getrennt in der Schlauchwandung 6′ ausgebildet sind, sind die Lichtleiter 11, 12 beim Ausführungsbeispiel der Fig. 4 zu einer Einheit zusammengefaßt, wobei die einzelnen Lichtfasern im Bereich des Mundduschengehäuses 1 getrennt sind und getrennt der Leuchtdiode 13 bzw. der Photodiode 14 zugeordnet sind.

In Fig. 6 ist eine Lichtleiteranordnung gezeigt, die Lichtleiter 11,12 sortiert zu einer Einheit zusammenfaßt. In Fig. 9 ist ein Lichtleiter gemäß der Fig 2 in der Wandung 6′ der Schlauchleitung 6 dargestellt. Es versteht sich, daß die Querschnittsform der Lichtleiter 11,12 beliebig, gegebenenfalls auch eckig gewählt sein kann.

Abweichend sind bei der Munddusche der Fig. 7 in einem Handstück 7 ein Infrarotgeber 18 angeordnet und im Mundduschengehäuse 1 ein Infrarotempfänger 19 vorgesehen. Mittels des Infrarotgebers 18 sind Signale dem Infrarotempfänger 19 gebbar, die über die elektronische Regeleinrichtung 20 zu Drehzahländerungen bzw. Ein- und Ausschaltungen des Elektromotors genutzt werden. Zum Betätigen des Infrarotgebers 18, z.B. einer Diode ist ein Schalter 22 vorgesehen, mittels dem die Diode 18 an eine Stromquelle 21 anlegbar ist. Die Stromquelle 21 ist durch einen Akku oder einer aufladbaren Batterie gebildet und über eine induktive Ladeeinrichtung 26 aufladbar.

Beim Ausführungsbeispiel der Munddusche der Fig. 8 ist in weiterer Abweichung ein Ultraschallgeber 23 im Handstück 7 angeordnet, der auf einen Ultraschallnehmer 24 der Regeleinrichtung 25 zu Regelungen des Elektromotors bzw. zu Ein- und Ausschaltungen wirkt. Der Ultraschallgeber 23 kann über den Betätigungsknopf 10 für das Flüssigkeitsventil 9 mitbetätigbar sein. Schließlich sind auch der Spiegel 15 bzw. der Ultraschallgeber 23 oder der Infrarotgeber 18 vermittels des Betätigungsgliedes 10 für das Flüssigkeitsventil betätigbar.

## Patentansprüche

1. Munddusche mit einer durch einen Elektromotor (5) antreibbaren Flüssigkeitspumpe (4), die über eine Schlauchleitung (6) an ein Handstück (7) mit Düsenrohr (8) fördert, bei der das Handstück Stellglieder (10) zur Unterbrechung der Flüssigkeitszuführung an das Düsenrohr und ein am Handstück angeordnetes Schaltglied (16) aufweist, das über in der Schlauchleitung integrierte Leiter mit dem Stromversorgungsteil für den Elektromotor in Verbindung steht, dadurch gekennzeichnet, daß die Leiter durch zwei flexible Lichtleiter (11,12) gebildet sind, daß den dem Elektromotor (5) zugenäherten Enden des einen Lichtleiters (12) ein Lichtgeber (13) und des anderen Lichtleiters (11) ein lichtempfindlicher Empfänger (14) und den dem Elektromotor (5) abgewandten Enden beider Lichtleiter (11,12) ein zu den beiden Lichtleiterenden verschiebund/oder klappbeweglich ausgebildeter Reflektor (15) zugeordnet ist und daß der lichtempfindliche Empfänger (14) an einem elektronischen Regelkreis und dem Stromversorgungsteil für Ein- Ausschaltungen und Drehzahländerungen des Elektromotors (5) anliegt.

2. Munddusche nach Anspruch 1, dadurch gekennzeichnet, daß die beiden Lichtleiter (11,12) durch Glasfasern oder Glasfasernbündel gebildet und in der Wandung (6′) der Schlauchleitung (6) geführt sind.

3. Munddusche nach Anspruch 1 und 2, dadurch gekennzeichnet, daß die beiden Lichtleiter (11,12) sortiert unmittelbar nebeneinander oder sortiert im Abstand voneinander in der Wandung (6′) der Schlauchleitung (6) untergebracht sind.

4. Munddusche nach Anspruch 1 und 2, dadurch gekennzeichnet, daß die beiden Lichtleiter (11,12) sortiert einen gemeinsamen Bauteil bilden und in diesem durch eine für Reflexionen indifferente Zwischenschicht (27) voneinander getrennt sind. (Fig. 6)

5. Munddusche nach Anspruch i und 2, dadurch gekennzeichnet, daß die beiden Lichtleiter (11,12) unsortiert zu einem gemeinsamen Bauteil zusammengefaßt sind und daß die einen Enden der beiden Lichtleiter (11,12) voneinander getrennt einer Lichtquelle (13) bzw. einem lichtempfindlichen Empfänger (14) und die anderen Enden der Lichtleiter (11,12) gemeinsam dem Reflektor (15) zugeordnet sind. (Fig. 3, 4)

6. Munddusche nach Anspruch 1 bis 5, dadurch gekennzeichnet, daß die Lichtleiter (11,12) eine runde oder eine eckige Querschnittsform aufweisen.

7. Munddusche nach Anspruch 1, dadurch gekennzeichnet, daß die Lichtquelle (13) durch eine einen Lichtsender bildende Leuchtdiode gebildet ist.

8. Munddusche nach Anspruch 1, dadurch gekennzeichnet, daß der lichtempfindliche Empfänger (14) durch eine Photodiode gebildet ist.

9. Munddusche nach Anspruch 1, dadurch gekennzeichnet, daß der Reflektor (15) durch einen ebenen oder gekrümmten Spiegel gebildet ist.

10. Munddusche nach Anspruch 9, dadurch gekennzeichnet, daß der Spiegel (15) an einem am Handstück (7) verschieblich ausgebildeten Betätigungsknopf (16) angeordnet ist und mittels diesem zu den Enden der Lichtleiter (11,12) entfernbar oder annäherbar ist.

11. Munddusche nach Anspruch 10, dadurch gekennzeichnet, daß der Spiegel (15) vermittels des Betätigungsknopfes (16) im Handstück (7) verschiebbar und klappbar oder verdrehbar ausgebildet ist.

12. Munddusche nach Anspruch 1, dadurch gekennzeichnet, daß der Spiegel (15) ortsfest im Handstück (7) angeordnet ist und daß die dem Elektromotor (5) abgewandten Enden der Lichtleiter (11,12) zum Spiegel (15) ortsveränderlich einstellbar ausgebildet sind.

13. Munddusche mit einer durch einen Elektromotor (5) antreibbaren Flüssigkeitspumpe (4), die über eine Schlauchleitung (6) an ein Handstück (7) mit Düsenrohr (8) fördert, bei der das Handstück Stellglieder (10) zur Unterbrechung der Flüssigkeitszuführung an das Düsenrohr und ein am Handstück angeordnetes Schaltglied aufweist, das über in der Schlauchleitung integrierte Leiter mit dem Stromversorgungsteil für den Elektromotor in Verbindung steht, dadurch gekennzeichnet, daß im Handstück (7) ein in der Lichtmenge fixer Lichtgeber abdeckbar, abschwenk- und/oder verschiebbar angeordnet ist, daß der Lichtgeber über einen in der Wandung (6′) der Schlauchleitung (6) untergebrachten flexiblen Lichtleiter (11 oder 12) mit dem anderen Ende einem lichtempfindlichen Empfanger im Aufnahmegehäuse für den Elektromotor zugeordnet ist, der gungsteil für Ein- Ausschaltungen und Drehzahländerungen des Elektromotors anliegt.

14. Munddusche mit einer durch einen Elektromotor (5) antreibbaren Flüssigkeitspumpe (4), die über eine Schlauchleitung (6) an ein Handstück (7) mit Düsenrohr (8) fördert, bei der das Handstück Stellglieder (10) zur Unterbrechung der Flüssigkeitszuführung an das Düsenrohr und ein am Handstück angeordnetes Schaltglied (22) aufweist, das mit dem Stromversorgungsteil für den Elektromotor koppelbar ist, dadurch gekennzeichnet, daß das Handstück (7) einen in seiner Intensität veränderlichen Infrarotsender (18) mit zugeordneter Stromquelle (21) aufweist und daß der zugehörige elektronische Regelkreis (20) für den Stromversorgungsteil für Ein- Ausschaltungen und/oder Drehzahländerungen des Elektromotors (5) mit einem Infrarotempfänger (19) versehen ist. (Fig. 7)

15. Munddusche nach Anspruch 14, dadurch gekennzeichnet, daß dem Infrarotsender (18) und dem Infrarotempfänger (19) aufeinander abgestimmte Infrarotlichtfilter zugeordnet sind.

16. Munddusche mit einer durch einen Elektromotor (5) antreibbaren Flüssigkeitspumpe (4), die über eine Schlauchleitung (6) an ein Handstück (7) mit Düsenrohr (8) fördert, bei der das Handstück Stellglieder (10) zur Unterbrechung der Flüssigkeitszuführung an das Düsenrohr und ein am Handstück angeordnetes Schaltglied für den Stromversorgungsteil des Elektromotors aufweist, dadurch gekennzeichnet, daß das Handstück (7) einen betätigbaren Ultraschallgeber (23) und das Aufnahmegehäuse (1) für den Elektromotor (5) einen Ultraschallempfänger (24) aufweist, der auf einen elektronischen Regelkreis (25) für den Stromversorgungsteil für Ein- Ausschaltungen und/oder Drehzahländerungen des Elektromotors (5) wirkt. (Fig. 8)

## Claims

1. Oral douche having a liquid pump (4), which is drivable by an electric motor (5) and conveys liquid via a flexible pipe (6) to a hand-piece (7) provided with a nozzle pipe (8), wherein the hand-piece includes adjustment members (10) for interrupting the supply of liquid to the nozzle pipe and a switching member (16), which is disposed on the hand-piece and communicates with the power supply unit for the electric motor via conductors which are incorporated in the flexible pipe, characterised in that the conductors are formed by two flexible photoconductors (11, 12), in that a light emitter (13) is associated with the ends of one photoconductor (12) facing the electric motor (5), and a light-sensitive receiver (14) is associated with the ends of the other photoconductor (11) facing the electric motor (5), and a reflector (15), which is adapted to be displaceable and/or pivotable towards the two ends of the photoconductors, is associated with the ends of both photoconductors (11, 12) remote from the electric motor (5), and in that the light-sensitive receiver (14) is connected to an electronic control circuit and the power supply unit for on-off switchings and speed changes of the electric motor (5).

2. Oral douche according to claim 1, characterised in that the two photoconductors (11, 12) are formed by glass fibres or glass fibre bundles and extend in the wall (6′) of the flexible pipe (6).

3. Oral douche according to claims 1 and 2, characterised in that the two photoconductors (11, 12) are accommodated in the wall (6′) of the flexible pipe (6) either sorted so as to be directly adjacent each other or sorted so as to be spaced from each other.

4. Oral douche according to claims 1 and 2, characterised in that the two photoconductors (11, 12) form a common component part when sorted and are separated from each other in said component part by an intermediate layer (27) which is indifferent to reflections (Fig. 6).

5. Oral douche according to claims 1 and 2, characterised in that the two photoconductors (11, 12) are combined to form a common component part when unsorted, and in that, when separated from one another, some ends of the two photoconductors (11, 12) are associated with a light source (13), or respectively a light-sensitive receiver (14), and the other ends of the photoconductors (11, 12) are jointly associated with the reflector (15) (Figs. 3, 4).

6. Oral douche according to claims 1 to 5, characterised in that the photoconductors (11, 12) have a circular or angular cross-sectional configuration.

7. Oral douche according to claim 1, characterised in that the light source (13) is formed by a light emitting diode forming a light transmitter.

8. Oral douche according to claim 1, characterised in that the light-sensitive receiver (14) is formed by a photodiode.

9. Oral douche according to claim 1, characterised in that the reflector (15) is formed by a flat or curved mirror.

10. Oral douche according to claim 9, characterised in that the mirror (15) is disposed on an operating knob (16), which is adapted to be displaceable on the hand-piece (7), and said mirror can be removed from, or brought nearer to, the ends of the photoconductors (11, 12) by means of said knob.

11. Oral douche according to claim 10, characterised in that the mirror (15) is adapted to be displaceable and pivotable or rotatable in the hand-piece (7) by means of the operating knob (16).

12. Oral douche according to claim 1, characterised in that the mirror (15) is disposed in a stationary manner in the hand-piece (7), and in that the ends of the photoconductors (11, 12), remote from the electric motor (5), are adapted to be displaceably adjustable relative to the mirror (15).

13. Oral douche having a liquid pump (4), which is drivable by an electric motor (5) and conveys liquid via a flexible pipe (6) to a hand-piece (7) provided with a nozzle pipe (8), wherein the hand-piece includes adjustment members (10) for interrupting the supply of liquid to the nozzle pipe and a switching member, which is disposed on the hand-piece and communicates with the power supply unit for the electric motor via conductors which are incorporated in the flexible pipe, characterised in that a light emitter, which has a fixed quantity of light, is disposed in the hand-piece (7) in a coverable, pivotable and/or displaceable manner, in that the other end of the light emitter is associated with a light-sensitive receiver in the housing for accommodating the electric motor via a flexible photoconductor (11 or 12), which is accommodated in the wall (6′) of the flexible pipe (6), and said receiver is connected to an electronic control circuit and the power supply unit for on-off switchings and speed changes of the electric motor.

14. Oral douche having a liquid pump (4), which is drivable by an electric motor (5) and conveys liquid via a flexible pipe (6) to a hand-piece (7) provided with a nozzle pipe (8), wherein the hand-piece includes adjustment members (10) for interrupting the supply of liquid to the nozzle pipe and a switching member (22), which is disposed on the hand-piece and is connectable to the power supply unit for the electric motor, characterised in that the hand-piece (7) includes an infra-red transmitter (18), which is variable in its intensity, together with an associated current source (21), and in that the associated electronic control circuit (20) for the power supply unit for on-off switchings and/or speed changes of the electric motor (5) is provided with an infra-red receiver (19) (Fig. 7).

15. Oral douche according to claim 14, characterised in that infra-red light filters, which are adapted to one another, are associated with the infra-red transmitter (18) and the infra-red receiver (19).

16. Oral douche having a liquid pump (4), which is drivable by an electric motor (5) and conveys liquid via a flexible pipe (6) to a hand-piece (7) provided with a nozzle pipe (8), wherein the hand-piece includes adjustment members (10) for interrupting the supply of liquid to the nozzle pipe and a switching member, which is disposed on the hand-piece, for the power supply unit of the electric motor, characterised in that the hand-piece (7) includes an actuatable ultrasonic transmitter (23), and the housing (1) for accommodating the electric motor (5) includes an ultrasonic receiver (24), which acts on an electronic control circuit (25) for the power supply unit for on-off switchings and/or speed changes of the electric motor (5) (Fig. 8).

## Revendications

1. Douche buccale, comportant une pompe de liquide (4) pouvant être entraînée par un moteur électrique (5), qui alimente, par l'intermédiaire d'un tuyau (6), sur une poignée (7), un tube à buse (8), dans laquelle la poignée présente des organes de commande (10) pour interrompre l'amenée de liquide au tube à buse et un organe de commutation (16) agencé sur la poignée, qui est relié, par l'intermédiaire de conducteurs intégrés dans le tuyau, à la partie d'alimentation en courant du moteur électrique,
caractérisée en ce que les conducteurs sont formés par deux fibres optiques souples (11,12), en ce que, à l'extrémité, proche du moteur électrique (5), d'une fibre optique (12), est associé un émetteur de lumière (13) et, à celle correspondante de l'autre fibre optique (11), un récepteur (14) sensible à la lumière, et aux extrémités, éloignées du moteur électrique (5), des deux fibres optiques (11,12), est associé un réflecteur (15) réalisé de façon rabattable et/ou déplaçable par rapport aux deux extrémités des fibres optiques, et en ce que le récepteur sensible à la lumière (14) est raccordé à un circuit de réglage électronique et à la partie d'alimentation en courant pour la mise en service et hors service et des modifications de la vitesse de rotation du moteur électrique (5).

2. Douche buccale selon la revendication 1,
caractérisée en ce que les deux fibres optiques (11,12) sont formées par des fibres de verre ou des faisceaux de fibres de verre et sont guidées dans la paroi (6′) du tuyau (6).

3. Douche buccale selon la revendication 1 ou 2,
caractérisée en ce que les deux fibres optiques (11,12) sont agencées, de façon assortie, directement l'une à côté de l'autre ou, de façon assortie, à distance l'une de l'autre dans la paroi (6′) du tuyau (6).

4. Douche buccale selon la revendication 1 ou 2,
caractérisée en ce que les deux fibres optiques (11,12) forment, de façon assortie, une pièce commune et sont séparées, l'une de l'autre, dans celle-ci, par une couche intermédiaire (27) neutre pour des réflexions (figure 6).

5. Douche buccale selon la revendication 1 ou 2,
caractérisée en ce que les deux fibres optiques (11,12) sont rassemblées, de façon non assortie, en une pièce commune, et en ce que des premières extrémités des deux fibres optiques (11,12), séparées l'une de l'autre, sont associées à une source de lumière (13) ou à un récepteur sensible à la lumière (14), et les autres extrémités des fibres optiques (11,12) sont associées ensemble au réflecteur (15) (figures 3, 4).

6. Douche buccale selon les revendications 1 à 5,
caractérisée en ce que les fibres optiques (11,12) présentent une forme de section transversale ronde ou polygonale.

7. Douche buccale selon la revendication 1,
caractérisée en ce que la source de lumière (13) est formée par une diode luminescente formant un émetteur de lumière.

8. Douche buccale selon la revendication 1,
caractérisée en ce que le récepteur sensible à la lumière (14) est formé par une diode photoélectrique.

9. Douche buccale selon la revendication 1,
caractérisée en ce que le réflecteur (15) est formé par un miroir plan ou cintré.

10. Douche buccale selon la revendication 9,
caractérisée en ce que le miroir (15) est agencé sur un bouton d'actionnement (16) disposé de façon mobile sur la poignée (7), et en ce que le miroir peut être éloigné ou rapproché des extrémités des fibres optiques (11,12) au moyen de celui-ci.

11. Douche buccale selon la revendication 10,
caractérisée en ce que le miroir (15) peut être déplacé et rabattu ou tourné dans la poignée (7) au moyen du bouton d'actionnement (16).

12. Douche buccale selon la revendication 1,
caractérisée en ce que le miroir (15) est agencé de façon fixe dans la poignée (7), et en ce que les extrémités, éloignées du moteur électrique (5), des fibres optiques (11,12) peuvent être réglées en modifiant leur position par rapport au miroir (15).

13. Douche buccale, comportant une pompe de liquide (4) pouvant être entraînée par un moteur électrique (5), qui alimente, par l'intermédiaire d'un tuyau (6), sur une poignée (7), un tube à buse (8), dans laquelle la poignée présente des organes de réglage (10) pour interrompre l'amenée de liquide au tube à buse et un organe de commutation agencé sur la poignée, qui est relié, par l'intermédiaire de conducteurs intégrés dans le tuyau, à la partie d'alimentation en courant du moteur électrique,
caractérisée en ce que, dans la poignée (7), il est agencé un émetteur de lumière, délivrant une quantité de lumière fixe, ledit émetteur de lumière pouvant être recouvert, pivoté et/ou déplacé, en ce que l'émetteur de lumière est associé, par l'intermédiaire d'une fibre optique souple (11 ou 12), agencée dans la paroi (6′) du tuyau (6), à l'autre extrémité, à un récepteur sensible à la lumière dans le boîtier de réception du moteur électrique, qui est relié à un circuit de réglage électronique et à la partie d'alimentation en courant pour la mise en circuit et hors circuit et des modifications de la vitesse de rotation du moteur électrique.

14. Douche buccale, comportant une pompe de liquide (4) pouvant être entraînée par un moteur électrique (5), qui alimente, par l'intermédiaire d'un tuyau (6), sur une poignée (7), un tube à buse (8), dans laquelle la poignée présente des organes de réglage (10) pour interrompre l'amenée de liquide au tube à buse et un organe de commutation (22) agencé sur la poignée, qui peut être couplé à la partie d'alimentation en courant du moteur électrique, caractérisée en ce que la poignée (7) présente un émetteur infrarouge (18) dont l'intensité peut être modifiée et ayant une source de courant (21) associée, et en ce que le circuit de réglage électronique correspondant (20) pour la partie d'alimentation en courant, pour une mise en circuit et hors circuit et/ou des modifications de la vitesse de rotation du moteur électrique (5), est muni d'un récepteur infrarouge (19) (figure 7).

15. Douche buccale selon la revendication 14,
caractérisée en ce que l'émetteur infrarouge (18) et le récepteur infrarouge (19) sont associés à des filtres de lumière infrarouge accordés l'un à l'autre.

16. Douche buccale, comportant une pompe de liquide (4) pouvant être entraînée par un moteur électrique (5), qui alimente, par l'intermédiaire d'un tuyau (6), sur une poignée (7), un tube à buse (8), dans laquelle la poignée présente des organes de réglage (10) pour interrompre l'amenée de liquide au tube à buse et un organe de commutation agencé sur la poignée, pour la partie d'alimentation en courant du moteur électrique,
caractérisée en ce que la poignée (7) présente un émetteur à ultrasons (23) pouvant être actionné et le boîtier de réception (1) du moteur électrique (5) présente un récepteur à ultrasons (24), qui agit sur un circuit de réglage électronique (25) pour la partie d'alimentation en courant, pour la mise en circuit et hors circuit et/ou des modifications de la vitesse de rotation du moteur électrique (5) (figure 8).
